# EUROPEAN PATENT SPECIFICATION

(11) **EP 2 845 792 B1**
(45) Date of publication and mention of the grant of the patent: **17.05.2017**
(21) Application number: 14181931.8
(22) Date of filing: 22.08.2014
(51) Int. Cl.: B63B 22/00, E21B 17/01, F16L 1/24

(54) **Method of providing buoyancy**
Verfahren zur Erzeugung von Auftriebskraft
Procédé permettant d'assurer la flottabilité

(30) Priority: 23.08.2013 GB 201315122; 28.08.2013 GB 201315313
(43) Date of publication of application: 11.03.2015
(73) Proprietor: Aubin Limited, Ellon, Aberdeenshire AB41 9RF (GB)
(72) Inventor: Collins, Patrick, Aberdeen, Aberdeenshire AB41 9RF (GB)
(74) Representative: HGF Limited

(56) References cited:
- EP-A1- 1 867 564
- US-B1- 6 347 411

## Description

The present invention relates to a method of providing buoyancy for underwater items.

The subsea industry employs a variety of different subsea technologies and infrastructure. The equipment not fixed to the seabed often requires, or is aided by, the provision of attached buoyancy modules. For example, risers which carry pump produced fluids from a subsea wellhead through the water column to a surface facility, such as an offshore platform, often have syntactic buoyancy modules attached thereto. At enhanced depths the riser is so heavy that it cannot support its own weight in the water and there is a significant risk of failure.

US6347411B1 describes a composition in the form of a buoyant putty. The composition contains a continuous phase and microballoons forming a discontinuous phase.

Syntactic buoyancy is used to reduce this "top tension" on risers or other subsea elements by providing distributed support. These syntactic buoyancy modules can also assist in shaping the underwater configuration of the risers in order to facilitate flow of the produced fluids, and allow enough slack to cope with the heave or other movement of a floating surface facility caused by the surface conditions.

Also, remotely operated vehicles (ROVs) often have a large syntactic buoyancy module provided therein. Buoyancy is added to ROVs to render them neutrally buoyant. This reduces the power required to maintain and manoeuvre the ROV in the water.

Whilst generally satisfactory, the inventor of the present invention has noted some limitations.

In accordance with a first aspect of the present invention there is provided a method of providing buoyancy, the method comprising the steps of:
adding a buoyant fluid to a container, the buoyant fluid comprising a base fluid, an activator and from 25 to 60% vol/vol microspheres; and
increasing the viscosity of the buoyant fluid to at least 80,000mPa·s at a shear rate of 0.8s⁻¹ at 293K.

The method may include the step of lowering the container into water. The water is typically seawater. The water may be salt-water and/or brine.

The method may further include the step of sealing the container. The container may be sealed before it is lowered into the water.

The step of lowering the container into the water is typically after the step of adding the buoyant fluid to the container but the buoyant fluid may be added to the container when the container is already located in the water.

The step of increasing the viscosity of the buoyant fluid may take from 1 minute to 24 hours, normally from 1 minute to 3 hours and optionally from 1 minute to 1 hour.

The invention may provide a convenient method of adding buoyancy to a structure including the container because it is first added as a fluid with a relatively low viscosity and then after about 1 hour, the viscosity of the buoyant fluid will typically have increased such that the fluid then has the viscosity of a thick paste. The thick paste can typically hold the microspheres in suspension over a very long period of time, such as 10 or 20 years.

The viscosity of a thick paste is such that the buoyant fluid will remain in a suitable container such as a 500ml jar when the container is inverted.

The container may be part of the structure that, in use, is located subsea. The container may be tubular-shaped. The tubular-shaped container may be part of a frame of the structure. The structure may be part of equipment used subsea and may for example be a pipe and/or cable laying plough and/or skid.

The method may include the step of sinking the structure after the buoyant fluid has been added to the container. In an alternative embodiment the buoyant fluid may be added to the container and/or structure when it is already in place subsea. It can be very difficult to place conventional buoyancy subsea because the material is buoyant and needs to be weighed down or pulled into place particularly if the buoyancy needs to be placed at depth.

The container may be referred to as a buoyancy module. The method of providing buoyancy may be a method of providing a buoyancy module.

The buoyant fluid may have a viscosity of at least 80,000mPa·s at a shear rate of 0.8s⁻¹ at 293K, typically at least 100,000mPa·s at a shear rate of 0.8s⁻¹ at 293K and optionally at least 120,000mPa·s at a shear rate of 0.8s⁻¹ at 293K.

At a shear rate of 2.09s⁻¹ and temperature of 293K, the viscosity may be at least 15,000 mPa·s optionally at least 25,000 mPa·s.

At a shear rate of 4.18s⁻¹ and temperature of 293K, the viscosity may be at least 10,000 mPa·s optionally at least 15,000 mPa·s.

The viscosities thus render the buoyant fluid unpumpable once it has set. This is in sharp contrast and against the teaching of EP 1 867 564 where a different buoyant fluid is provided for a different purpose - a much less viscous fluid which is pumpable to manipulate and vary buoyancy.

The buoyant fluid may remain in the container for at least 10 years, typically at least 20 years. It is typically the increased viscosity of the buoyant fluid that helps keep the fluid in the container for this extended period of time.

In accordance with a second aspect of the present invention there is provided a method of providing buoyancy, the method comprising the steps of:
transporting a base fluid to an onsite location;
separately transporting an activator to the onsite location;
adding one of the base fluid and activator to a container; and
adding the other of the base fluid and activator to the container at the onsite location, such that the base fluid and activator combine to provide a buoyant fluid with a viscosity greater than that of the base fluid;
wherein one or both of the base fluid and activator comprises from 25 to 60% vol/vol microspheres.

The step of combining the base fluid and activator may include mixing the two components in a mixing vessel and/or in an input or mixing tube.

The inventor of the present invention has noted that buoyancy can be provided much more conveniently by following the steps according to a method of the invention. The container and components can be conveniently transported to the onsite location and one or both adding steps can be performed locally. In this way, the viscosity of the buoyant fluid increases onsite which provides a variety of benefits, for example transportation costs can often be saved compared to moving large syntactic buoyancy modules of odd shapes and sizes. Moreover the involved process to make syntactic buoyancy, including for example heat treatment, can be reduced or sometimes entirely avoided.

The steps of the method can be conducted in any order. The activator is however typically added to the container after the base fluid. The step of adding one of the base fluid and activator to the container is also typically done at the onsite location.

The base fluid may be transported to the onsite location in the container.

The microspheres can be added separately or may be in either the base fluid or activator. Normally the base fluid comprises the microspheres.

The viscosity of the buoyant fluid may be greater than that of the base fluid after from 1 minute to 24 hours, normally from 1 minute to 3 hours and optionally from 1 minute to 1 hour.

The onsite location may be a surface vessel, such as ship or an offshore platform. The onsite location may be onshore, but preferably close to the area of use. The closer to the area of use the more benefit that may result from reduced transportation costs. Thus preferably the onsite location is within 10 miles, optionally within 2 miles of the area of use.

The onsite location may be underwater and/or subsea. When the onsite location is underwater and/or subsea the buoyancy, also referred to as permanent buoyancy, can be installed in situ.

In one embodiment, the container may be pre-filled with a starter fluid such as water. The container may have at least one inlet and at least one outlet. The base fluid may be added to the container through the at least one inlet, thus displacing the starter fluid through the outlet. This may make it easier to locate and/or place the container in situ because the container is less buoyant. The buoyancy including the buoyancy fluid may then be added to the container.

For certain embodiments the container is attached to a structure on which it is to be used, before the activator is added, or indeed, before the base fluid is activated. In this way it can be much easier to attach the container when it does not have the fluids therein.

The base fluid, normally comprising the microspheres, is transported to the onsite location typically having a first three-dimensional (3D) shape. This shape is normally defined by a vessel used to transport the base fluid. The buoyant fluid normally has a different second three-dimensional (3D) shape. The first 3D shape may be one which is convenient to transport the base fluid and the second 3D shape may be one which is convenient to its intended use, which may be a 3D shape that is difficult to transport.

The container may be a bag. Preferably the container is at least partially deformable. A variety of containers with different shapes can be used to form the shapes required for the different application of the buoyancy, for example to attach to a riser or to fit within a void in an ROV. One suitable shape is a tubular shape.

The viscosities detailed herein were determined using a ThermoHaake™ ViscoTester™ 7L with L3 and L4 spindles.

The viscosity of the base fluid before combination with the activator may be approximately 14,000mPa·s at a shear rate of 0.8s⁻¹ at 293K.

The viscosity of the buoyant fluid is relatively high, and so difficult if not impossible to pump after it has set, for example after about 1 hour after mixing. This maintains the microspheres in the body of the container over an extended period of time, rather than the microspheres being able to gravitate to the surface.

The container may be one or more of flexible, malleable and bendable. When the buoyant fluid is in the container the viscosity and/or pressure of the buoyant fluid in the container may add to the rigidity of the container but the container will typically remain one or more of flexible, malleable and bendable.

It may be an advantage of the present invention that the flexibility, malleability and/or bendability of the container means that in the event of an object colliding with the container, the container can absorb some of the impact of the collision. Other known and/or regular buoyancy modules are not able to absorb the force of an impact in this way. The flexibility, malleability and/or bendability of the container may mean that in the event of an impact, the risk of damage to the container and/or object is reduced and/or the container remains in place rather than being dislodged from where it is secured.

The buoyant fluid may be compressible. The buoyant fluid may be compressible by approximately 5% under normal working conditions of the invention. The container may further comprise a bladder to help absorb some of the impact of a collision between an object and the container.

Optionally the buoyant fluid has a specific gravity of less than 0.70g/cm³, more optionally less than 0.65g/cm³, especially less than 0.60g/cm³, and perhaps less than 0.55g/cm³.

The base fluid may have a specific gravity of more than 0.40g/cm³, optionally more than 0.45g/cm³, and may be more than 0.50g/cm³.

The base fluid may comprise water.

The base fluid typically comprises an oil. The oil is preferably a low toxicity oil, such as a hydrocarbon, an alkane, an aliphatic oil, poly-alpha-olefin, alkyl ester or vegetable oil that is a triglyceride such as one having the structure: 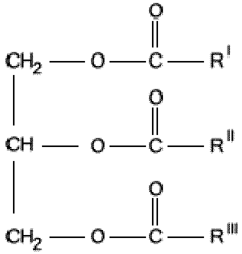 where R^{I}, R^{II} and R^{III} are hydrocarbon chains typically with a chain length of from C12 to C22 to give a range of fatty acids. The hydrocarbon chains may have from zero to three double bonds.

Preferably the oil is derived from nature. The oil may be vegetable oil and/or biodegradable. Thus for certain embodiments of the invention, the inherent environmental risk of the buoyant fluid and therefore also the base fluid and oil leaking from the container is mitigated and therefore not a significant concern because the vegetable and/or biodegradable oil used does not present an environmental risk or concern to wildlife.

In an alternative embodiment the oil is synthetic.

The base fluid may also comprise a viscosifying agent such as an organophilic clay, dispersed silica, long chain polymeric materials, surfactants or mixtures thereof.

The activator is typically a fluid. The activator may be a blend of different chemicals. The blend may comprise a gelling agent such as a phosphate ester and may be an iron phosphate ester (FePO₃) Alcohol ethoxylate may also be included in the blend. A Fe(III) salt such as iron sulphate may also be included in the blend. The buoyant fluid may comprise from 0.5 to 6 wt%, preferably 1 to 4 wt% activator.

The microspheres may each have a sealed chamber containing a gas or a vacuum. The microspheres may be from 5 microns to 5mm in diameter, optionally from 10 to 500 microns in diameter and more optionally from 20 to 200 microns in diameter.

The microspheres are typically rigid and so are typically incompressible at the pressures found in underwater environments. The microspheres may be obtained from 3M. The microspheres may be rated to over 31,000kPa (4500psi), preferably over (41,000kPa) 6000psi. Other microspheres with different strengths and densities may be used and generally stronger microspheres have higher densities.

The microspheres may be glass microspheres. The microsphere may lower the density of the buoyant fluid to a density of approximately 475 kg/m³ at room temperature.

The buoyant fluid typically comprises from 30 to 50% vol/vol microspheres.

The containers and methods of providing buoyancy described herein may be used as a buoyancy module for a subsea riser. In an alternative embodiment the container and methods of providing buoyancy described herein may be used as a buoyancy module for an ROV.

The optional features of the first aspect of the present invention can be incorporated into the second aspect of the present invention and vice versa.

There is also herein described a use of a buoyancy module comprising a buoyant fluid having a viscosity of at least 80,000mPa·s at a shear rate of 0.8s⁻¹ at 293K and comprising from 25 to 60% vol/vol microspheres, as a buoyancy aid for a subsea riser.

There is also herein described the use of a buoyancy module comprising a buoyant fluid having a viscosity of at least 80,000mPa·s at a shear rate of 0.8s⁻¹ at 293K and comprising from 25 to 60% vol/vol microspheres, as a buoyancy aid for a remotely operated vehicle.

The preferred and optional features of the container and buoyancy module as described herein are also applicable and are preferred and optional features of the buoyancy module according to the use as described above.

There is also herein described a method of adding buoyancy to a subsea structure, the method comprising adding a buoyant fluid to a bore of a tube, the tube being part of a tubular frame associated or integral with the subsea structure.

The subsea structure may be a plough, a pipe connector, or alternatively it may be another piece of subsea equipment. The frame normally comprises a series of tubes, and more than one of said tubes is normally filled with said buoyant fluid.

The buoyant fluid described above is normally the buoyant fluid described herein with reference to other aspects of the invention.

Unless otherwise specified, all component mixtures are determined by weight.

An embodiment of the invention will now be described by way of example only and with reference to the accompanying drawings, in which:
Figure 1 shows a buoyant fluid in a bag or other receptacle attached to a subsea riser to create a catenary bend in the subsea riser;
Figure 2 shows the buoyant fluid in a plastic shell or bag fitted around a vertical riser to provide buoyancy;
Figure 3 shows the buoyant fluid in an element to create a bend in a pipeline;
Figures 4A and 4B show a bag filled with buoyant fluid face on and edge on; and,
Figure 4C shows a number of bags fitted to a subsea skid to make it neutrally buoyant.
Figure 5 is a subsea pipe connector suitable for use with embodiments of the invention.

Embodiments of the invention provide a container or buoyancy module comprising a viscous unpumpable fluid which is used for a variety of long-term subsea applications.

To assemble a buoyancy module 20, a deformable bag is provided with a fluid comprising a base fluid including an oil and a plurality of microspheres. The fluid comprises 77% paraffin, 0.5% phosphate ester, 0.5% FeSO₄, 0.2% ethylene oxide and 21.8% microspheres wt/wt.

The bag is transported to the onsite location, typically a vessel. The viscosity of the base fluid allows it to be shaped as required during transport.

At the onsite location, an activator which acts as a setting agent, is then added, which increases the viscosity of the base fluid and now buoyant fluid to more than 80,000mPa·s at a shear rate of 0.8s⁻¹ at 293K. The activator may be referred to as an additive. The buoyant fluid can then be shaped according to is intended use. The buoyant fluid may be a gel.

The activator is a mixture of a phosphate ester, FeSO₄, ethylene oxide and a surfactant. The buoyant fluid thus has a composition of 75% linear paraffin, 1.5% phosphate ester, 1% ferric sulphate (20% solution), 0.5% alcohol ethoxylate, and 22% glass microspheres wt/wt. For different embodiments the amounts can be varied as required and in particular, the amount of glass microspheres can be varied depending on the buoyancy required and the depth of intended use. The present examples are rated to 3000 metres depth.

In an alternative embodiment the buoyant fluid comprises: 73% linear paraffin, 2% attapulgite, 3% phosphate ester (the activator), 1% water and 21% glass microspheres wt/wt. The attapulgite is a gelling agent.

The viscosities using various spindles and resulting viscosities, for the base fluid prior to activation are are set out in table 1 below:

**Table 1**

| RPM | spindle | Base Fluid (pre-activation) |
|---|---|---|
| 1 | L3 | 38060 |
| 1.5 | L3 | 27290 |
| 2 | L3 | 22260 |
| 2.5 | L3 | 19380 |
| 3 | L3 | 17270 |
| 4 | L3 | 14590 |
| 5 | L3 | 12740 |
| 6 | L3 | 11330 |
| 10 | L3 | 8360 |
| 20 | L4 | 5700 |
| 30 | L4 | 4480 |
| 50 | L4 | 3490 |
| 60 | L4 | 3160 |
| 100 | L4 | 2460 |

The viscosities of the buoyant fluid once it has been activated are much thicker - to the extent that the L3 spindle couldn't be used. These are all based on using an L4 spindle and are shown in table 2.

**Table 2**

| RPM | new (post-activation) |
|---|---|
| 2 | 154290 |
| 3 | 105320 |
| 4 | 79360 |
| 5 | 64540 |
| 10 | 34000 |
| 20 | 16510 |
| 30 | 10270 |
| 50 | 6330 |
| 60 | 5290 |
| 100 | 3670 |

To determine the shear rate based on the RPM the following conversion factors can be used:
Shear rate (in s⁻¹) = RPM x 0.210 when using the L3 spindle
Shear rate (in s⁻¹) = RPM x 0.209 when using the L4 spindle

For example 10RPM using an L4 spindle equates to a shear rate of 2.09s⁻¹.

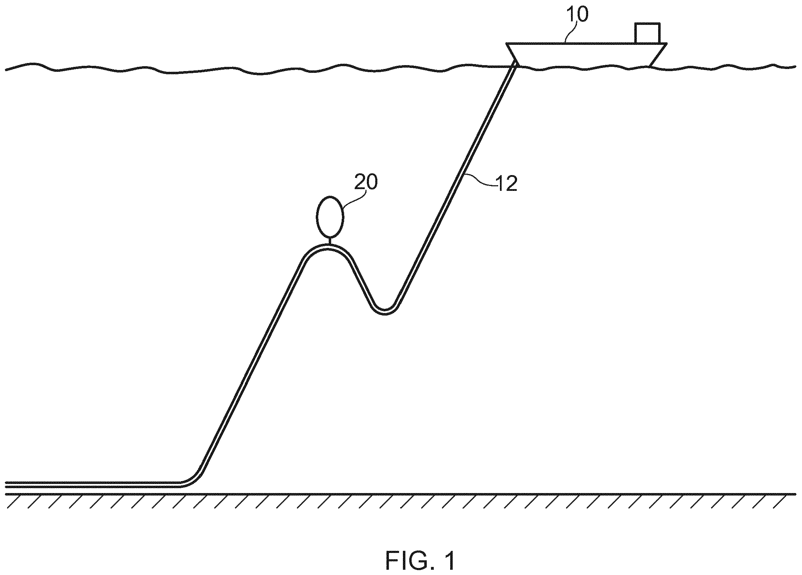

Figure 1 shows a vessel 10 receiving a riser 12 that transports fluids from a subsea well (not shown) to the vessel 10. The riser or subsea riser 12 has a container or buoyancy module 20 attached thereto which reduces the weight of the riser 12 on the vessel 10 and also provides sufficient slack to allow for movement of the vessel 10 due to surface conditions.

The container or buoyancy module 20 shown in Figure 1 is a bag. The bag 20 is attached to the riser which is deployed in the normal manner. For certain embodiments, the bag 20 may be added to the riser 12 first, and then the components of the buoyant fluid added subsequently.

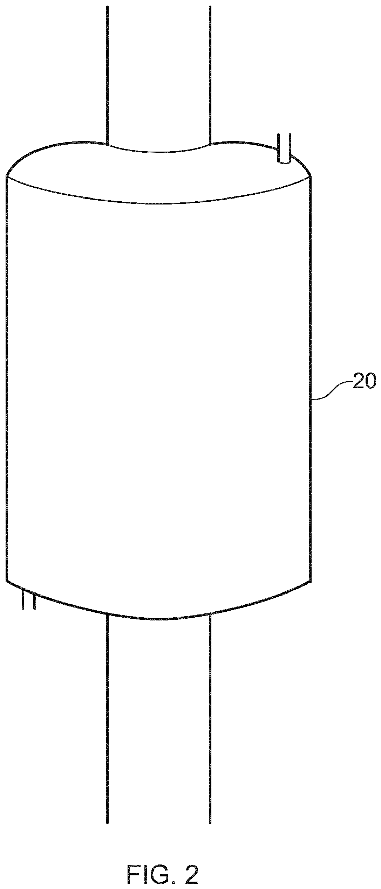

Figure 2 shows the buoyant fluid in a plastic shell 20 fitted around a vertical riser to provide buoyancy.

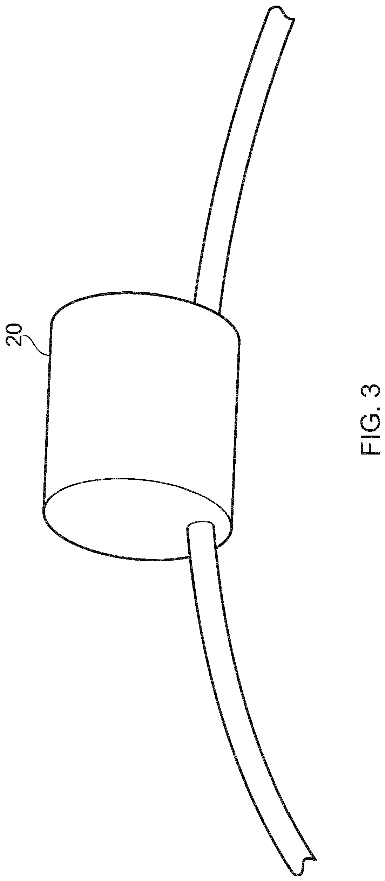

Figure 3 shows the viscous or buoyant fluid (the combination of the base fluid, activator and microspheres) filling an element 20 to create a bend in a pipeline.

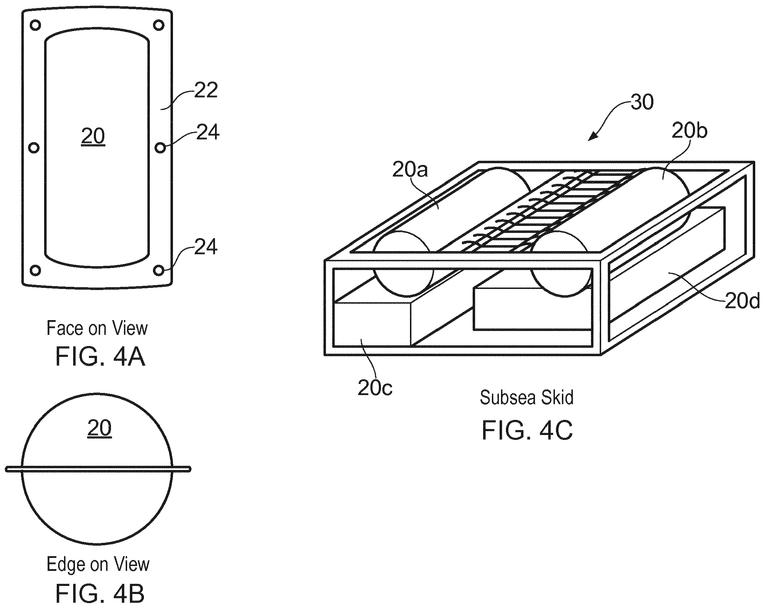

Figures 4A and 4B show a bag 20 filled with the viscous or buoyant fluid face on and edge on. Edges 22 with attachment points 24 are connected to the bag 20.

Figure 4C shows a number of bags 20a, 20b, 20c and 20d fitted to a subsea skid 30 to make it neutrally buoyant.

In any case, the examples show a bag 20 containing buoyant fluid used to provide buoyancy subsea.

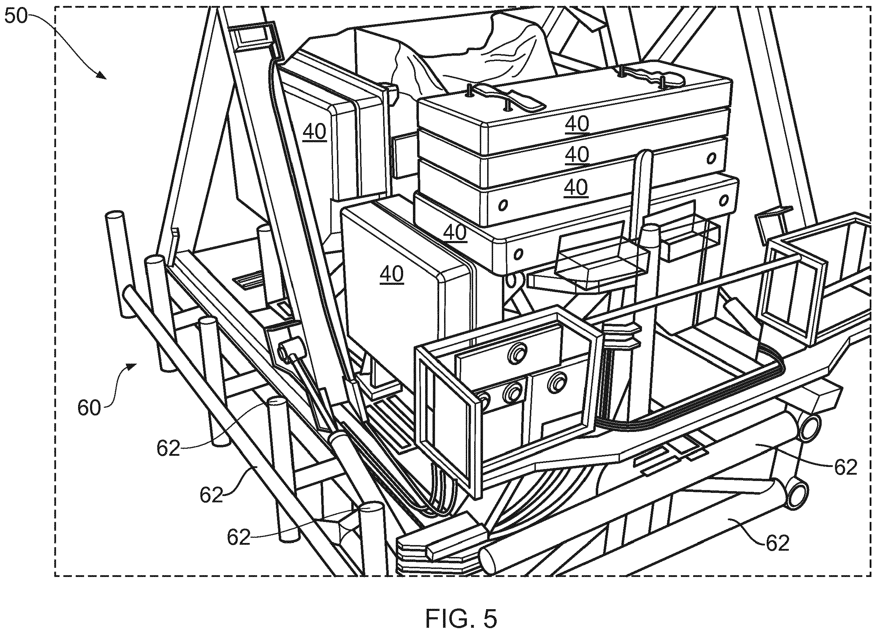

In figure 5 a subsea pipe connector 50 having a frame 60. A variety of frames are used subsea, such as ploughs and the like. Oftentimes syntactic buoyancy units 40 are added to the pipe connector 50 in order to add buoyancy subsea. Embodiments of the present invention use the internal voids 62 in the frame as a container for the buoyant gel which is added thereto. This can reduce or remove the requirement to add syntactic buoyancy units, such as those 40 shown in Figure 5. One or more advantages can ensue - the subsea equipment can be easier to move, and/or it can be smaller as there is no or less need for space for attached syntactic units. Moreover, for certain embodiments the frames can be rated to a lesser strength because the inner side of the tubular elements of the frame are filled and provide support to the frame, providing a closer pressure balance.

An advantage of certain embodiments of the invention is that the bag or housing may be filled to the appropriate size. For example, in the event it is found that the buoyancy module is too large (or has too much buoyancy) for the intended use, embodiments of the invention can easily be manipulated onsite, to add or reduce the amount of fluid. In contrast, known solid buoyancy modules require portions to be cut off which is difficult, if at all possible, onsite and is approximate and cannot be reversed.

An advantage of certain embodiments of the invention is that the bag and fluids may be conveniently transported to a location, compared to the existing practice of transporting large and odd shapes, which is much more cumbersome and expensive.

An advantage of certain embodiments of the invention is that when filled with fluid, the bags are firm, for example like a bicycle tyre, and so can transfer pressure encountered subsea. The bag or container therefore need not in itself be strong enough to cope with subsea pressure without deforming.

An advantage of certain embodiments of the invention is that the many fluids of the present invention can be tested and certified on a small scale compared to large syntactic buoyancy modules which need to be tested in a large hydro facility, which increases their cost.

Improvements and modifications may be incorporated herein without departing from the scope of the invention.

## Claims

1. A method of providing buoyancy, the method comprising the steps of:
(a) adding a buoyant fluid to a container (20), the buoyant fluid comprising a base fluid, an activator and from 25 to 60% vol/vol microspheres; and
(b) increasing the viscosity of the buoyant fluid to at least 80,000mPa·s at a shear rate of 0.8s⁻¹ at 293K.

2. A method as claimed in claim 1, wherein the container (20) is part of a structure that, in use, is located subsea.

3. A method as claimed in either preceding claim, wherein the container (20) is tubular-shaped.

4. A method as claimed in claim 3, wherein the tubular-shaped container (20) is part of a frame (60) of the structure.

5. A method as claimed in any preceding claim, wherein the viscosity of the buoyant fluid is at least 120,000mPa·s at a shear rate of 0.8s⁻¹ at 293K.

6. A method as claimed in any preceding claim, wherein the container (20) is suitable to attach to a riser or to fit within a void in an ROV.

7. A method as claimed in any preceding claim, wherein the base fluid comprises an oil.

8. A method as claimed in any preceding claim, wherein the buoyant fluid comprises from 0.5 to 6 wt%, optionally 1 to 4 wt% activator.

9. A method as claimed in any preceding claim, wherein the microspheres are from 20 to 200 microns in diameter.

10. A method as claimed in any preceding claim, wherein the container (20) is a bag which is optionally at least partially deformable.

11. A method of providing buoyancy, the method comprising the steps of:
a. transporting a base fluid to an onsite location;
b. separately transporting an activator to the onsite location;
c. adding one of the base fluid and activator to a container (20); and
d. adding the other of the base fluid and activator to the container (20) at the onsite location, such that the base fluid and activator combine to provide a buoyant fluid with a viscosity greater than that of the base fluid;
e. wherein one or both of the base fluid and activator comprises from 25 to 60% vol/vol microspheres.

12. A method as claimed in claim 11, wherein the step of adding one of the base fluid and activator to the container (20) is also done at the onsite location.

13. A method as claimed in any one of claims 11 to 12, wherein the base fluid is transported to the onsite location in the container (20).

14. A method as claimed in any one of claims 11 to 13, wherein the viscosity of the buoyant fluid is greater than that of the base fluid after from 1 minute to 24 hours after combination of the base fluid and activator.

## Patentansprüche

1. Verfahren zur Erzeugung von Auftriebskraft, wobei das Verfahren folgende Schritte umfasst:
(a) Zuführen eines Auftriebsfluids zu einem Behältnis (20), wobei das Auftriebsfluid ein Grundfluid, einen Aktivator und von 25 bis 60% Vol/Vol Mikrokugeln aufweist, und
(b) Erhöhen der Viskosität des Auftriebsfluids auf mindestens 80.000mPa·s bei einer Scherrate von 0,8s⁻¹ bei 293K.

2. Verfahren nach Anspruch 1, wobei das Behältnis (20) Teil einer Konstruktion ist, die bei Benutzung sich unterwasser befindet.

3. Verfahren nach einem der vorhergehenden Ansprüche, wobei das Behältnis (20) rohrförmig ist.

4. Verfahren nach Anspruch 3, wobei das rorhförmige Behältnis (20) Teil eines Rahmens (60) der Konstruktion ist.

5. Verfahren nach einem der vorhergehenden Ansprüche, wobei die Viskosität des Auftriebsfluids auf mindestens 120.000mPa·s bei einer Scherrate von 0,8s⁻¹ bei 293K beträgt.

6. Verfahren nach einem der vorhergehenden Ansprüche, wobei das Behältnis (20) zum Anbringen an einer Steigleitung oder zum Einpassen innerhalb eines Hohlraums in einem ROV geeignet ist.

7. Verfahren nach einem der vorhergehenden Ansprüche, wobei das Grundfluid ein Öl aufweist.

8. Verfahren nach einem der vorhergehenden Ansprüche, wobei das Auftriebsfluid von 0,5 bis 6 Gew%, optional 1 bis 4 Gew% Aktivator aufweist.

9. Verfahren nach einem der vorhergehenden Ansprüche, wobei die Mikrokugeln 20 bis 200 Mikron im Durchmesser groß sind.

10. Verfahren nach einem der vorhergehenden Ansprüche, wobei das Behältnis (20) eine Tasche ist, die optional mindestens teilweise verformbar ist.

11. Verfahren zur Erzeugung von Auftriebskraft, wobei das Verfahren folgende Schritte umfasst:
a. Transportieren eines Grundfluids zu einem Standort vor Ort,
b. separates Transportieren eines Aktivators zum Standort vor Ort,
c. Zuführen von einem des Grundfluids und Aktivators zum Behältnis (20) und
d. Zuführen des anderen des Grundfluids und Aktivators zum Behältnis (20) am Standort vor Ort, so dass das Grundfluid und der Aktivator sich verbinden, um ein Auftriebsfluids mit einer Viskosität, die höher als die des Grundfluids ist, bereitzustellen,
e. wobei eines oder beide des Grundfluids und Aktivators 25 bis 60% Vol/Vol Mikrokugeln aufweisen.

12. Verfahren nach Anspruch 11, wobei der Schritt des Zuführens von einem des Grundfluids und Aktivators zum Behältnis (20) auch am Standort vor Ort durchgeführt wird.

13. Verfahren nach einem der Ansprüche 11 bis 12, wobei das Grundfluid zum Standort vor Ort im Behältnis (20) transportiert wird.

14. Verfahren nach einem der Ansprüche 11 bis 13, wobei die Viskosität des Auftriebsfluids höher als die des Grundfluids nach ab 1 Minute bis 24 Stunden nach Verbindung des Grundfluids mit dem Aktivator ist.

## Revendications

1. Procédé permettant d'assurer la flottabilité, le procédé comprenant les étapes de :
(a) addition d'un fluide flottant à un contenant (20), le fluide flottant comprenant un fluide de base, un activateur et de 25 à 60 % en vol/vol de microsphères ; et
(b) augmentation de la viscosité du fluide flottant à au moins 80 000 mPa·s à un taux de cisaillement de 0,8 s⁻¹ à 293 K.

2. Procédé selon la revendication 1, ledit contenant (20) faisant partie d'une structure qui, lors de l'utilisation, est située sous la mer.

3. Procédé selon l'une quelconque des revendications précédentes, ledit contenant (20) possédant une forme tubulaire.

4. Procédé selon la revendication 3, ledit contenant de forme tubulaire (20) faisant partie de l'ossature (60) de la structure.

5. Procédé selon l'une quelconque des revendications précédentes, ladite viscosité du fluide flottant étant d'au moins 120 000 mPa·s à un taux de cisaillement de 0,8s⁻¹ à 293K.

6. Procédé selon l'une quelconque des revendications précédentes, ledit contenant (20) étant adapté pour être fixé à une colonne montante ou pour être monté à l'intérieur d'un espace vide dans un véhicule sous-marin téléguidé (ROV).

7. Procédé selon l'une quelconque des revendications précédentes, ledit fluide de base comprenant une huile.

8. Procédé selon l'une quelconque des revendications précédentes. ledit fluide flottant comprenant de 0,5 à 6 % en poids, éventuellement 1 à 4 % en poids, d'activateur.

9. Procédé selon l'une quelconque des revendications précédentes, lesdites microsphères possédant un diamètre allant de 20 à 200 microns.

10. Procédé selon l'une quelconque des revendications précédentes, ledit contenant (20) étant un sac qui peut être au moins partiellement déformable.

11. Procédé permettant d'assurer la flottabilité, le procédé comprenant les étapes de :
a. transport du fluide de base vers un emplacement sur site ;
b. transport séparé d'un activateur vers un emplacement sur site ;
c. addition de l'un du fluide de base et de l'activateur au contenant (20) ; et
d. addition de l'autre du fluide de base et de l'activateur au contenant (20) à un emplacement sur site, de sorte que le fluide de base et l'activateur se combinent pour produire un fluide flottant possédant une viscosité supérieure à celle du fluide de base ;
e. l'un et/ou l'autre du fluide de base et de l'activateur comprenant de 25 à 60 % en vol/vol de microsphères.

12. Procédé selon la revendication 11, ladite étape d'addition de l'un du fluide base et de l'activateur au contenant (20) étant réalisée également à un emplacement sur site.

13. Procédé selon l'une quelconque des revendications 11 à 12, le fluide de base étant transporté vers l'emplacement sur site dans le contenant (20).

14. Procédé selon l'une quelconque des revendications 11 à 13, ladite viscosité du fluide flottant étant supérieure à celle du fluide de base après 1 minute à 24 heures après combinaison du fluide de base et de l'activateur.
